# DEMANDE DE BREVET EUROPEEN

(11) **EP 2 960 833 A1**
(43) Date de publication de la demande: **30.12.2015**
(21) Numéro de dépôt: 14306028.3
(22) Date de dépôt: 27.06.2014
(51) Int. Cl.: G06K 19/077, B29C 45/00

(54) **Procédé et dispositif de fabrication de carte à puce, et carte à puce obtenue par ce procédé**

(71) Demandeur: Gemalto SA, 92190 Meudon (FR)
(72) Inventeur: Renouard, Jéremy, 92190 Meudon (FR); Froger, Alexis, 92190 Meudon (FR)
(74) Mandataire: Cour, Pierre

(57) **Abrégé**

La carte à puce selon l'invention est fabriquée par moulage par injection de matière plastique dans un moule comportant un ensemble de moule (20) pour le moulage d'une carte (3) de plus petit format, coulissant dans un autre ensemble de moule (10) pour le moulage d'une carte (2) de plus grand format, les deux corps de carte étant réalisés en une seule opération d'injection alors que les corps de carte sont dans des plans décalés, et en réalisant, au niveau de zones de liaison (5) entre les corps de cartes, une rainure (3a) sur le chant d'un des corps de carte et une nervure (2a) de forme complémentaire sur le chant de l'autre corps de carte, puis, après solidification au moins partielle des corps de carte, on ramène les corps de carte dans leur position coplanaire finale, les rainures et nervures étant réalisées de manière que lorsque les corps de cartes sont ramenés dans leur position coplanaire finale, les nervures (2a) s'emboîtent dans les rainures (3a) en enserrant le corps de carte (3) de deuxième format dans le corps de carte (2) de premier format.

## Description

La présente invention concerne un nouveau procédé de fabrication de cartes à puce, en particulier destinées à une utilisation dans des téléphones portables. Elle concerne aussi un nouveau dispositif pour la mise en oeuvre du procédé, ainsi que une carte à puce obtenue par ce procédé.

Les cartes à puces concernées par l'invention sont en particulier des modules d'identification abonnés, dites cartes SIM. Les cartes SIM sont destinées à être incorporées au sein de téléphones portables. Les cartes SIM existent en plusieurs formats normalisés définis par des facteurs de forme 2FF, 3FF ou 4FF UICC (de l'anglais Universal Integrated Circuit Card).

La miniaturisation et l'augmentation des fonctionnalités des téléphones portables ont conduit à ce que le format des cartes SIM soit de plus en plus petit. Ainsi, on est passé du facteur de forme 2FF (25 x 15 mm) au 3FF (15 x 12 mm) puis au 4FF encore plus petit.

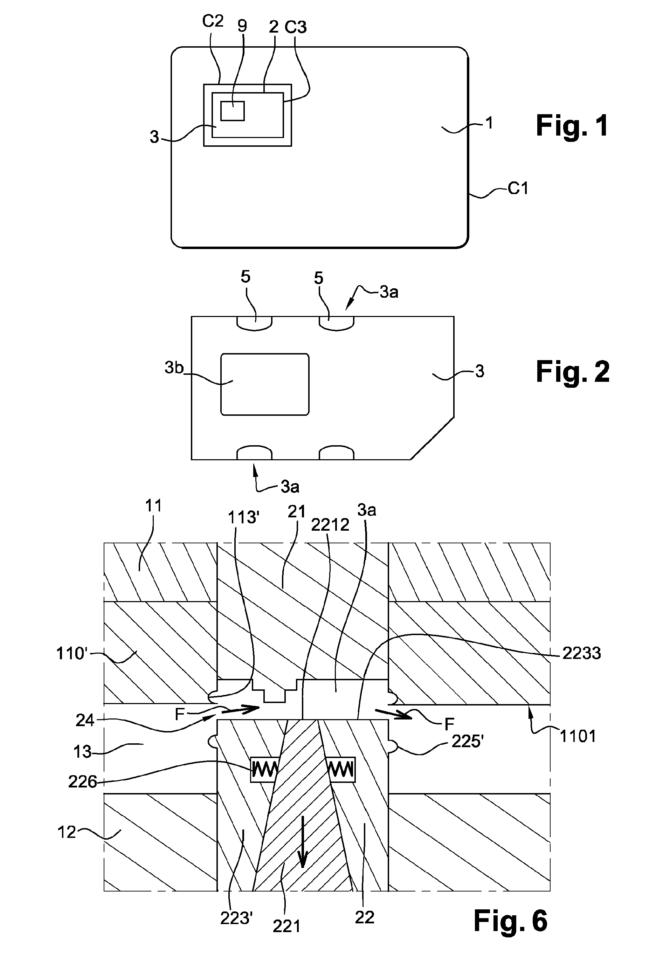

Typiquement, une carte SIM comporte, d'une part, un corps de carte, couramment réalisé par moulage par injection, et, d'autre part, une puce à circuit intégré, fixée sur ce corps de carte. Le corps de carte, se présente sensiblement sous la forme d'un parallélépipède rectangle d'épaisseur réduite. Généralement, pour la fabrication et la commercialisation des formats de carte 2FF, 3FF et 4FF, le corps de carte de plus petit format est englobé à l'intérieur d'un pourtour correspondant à un format plus grand, en général le format immédiatement supérieur. Ainsi, typiquement, une carte SIM peut être fabriquée et commercialisée sous un format 1FF, correspondant à un format carte de crédit, dont le corps englobe le corps d'une carte mini-SIM de format 2FF, lequel peut englober le corps d'une carte micro-SIM de format 3FF, etc. à la manière de la carte représentée figure 1, appelée alors carte multiformats. La puce est bien évidemment fixée sur la carte de plus petite dimension, dans un logement réalisé en creux dans l'épaisseur de la carte.

Pour utiliser la carte SIM, en tenant compte du format requis par l'appareil où la carte doit être insérée, l'utilisateur désolidarise la carte au format requis du corps de carte de dimension supérieure. Pour permettre cette désolidarisation de manière la plus aisée possible, le pourtour de chaque format est marqué par une ligne de prédécoupe, qui constitue un affaiblissement de la matière du corps de carte, apte à faciliter la séparation entre la carte de format désirée et le corps de carte de format supérieur, tout en assurant cependant un maintien suffisant entre lesdits corps de carte jusqu'à la séparation volontaire effectuée par l'utilisateur.

Une première manière de former les lignes de prédécoupe est de former une rainure traversant sur toute son épaisseur le corps de carte d'un plus grand format et délimitant le pourtour de la carte de format inférieur. Cette rainure débouchante est cependant discontinue de manière à laisser subsister des bretelles de liaison, typiquement au nombre de trois, assurant le maintien du corps de carte de petit format par rapport au corps de carte de dimension supérieure. De plus l'épaisseur de ces bretelles est réduite, et elles comportent chacune une ligne de rupture visant à ce que la carte de plus petite dimension, typiquement une mini-carte SIM, puisse ultérieurement être séparée du reste du corps de carte puis incorporée au sein de téléphones portables acceptant le format mini-carte.

Un procédé classique de réalisation de ces lignes de prédécoupe est le procédé par moulage, dans lequel la carte est moulée par injection et la cavité destinée au logement de la puce, les lignes de prédécoupe avec les bretelles de liaison et les lignes de rupture de ces bretelles, sont obtenues lors du moulage, par utilisation de moules comportant des noyaux mobiles, déplacés vers l'intérieur du moule juste après injection de la matière plastique dans le moule, et alors que la matière plastique n'est pas encore solidifiée. L'utilisation de tels noyaux permet d'obtenir directement lors du moulage des zones de matière de faible épaisseur tels que lesdites bretelles et leurs lignes de rupture. Ce procédé de fabrication permet de fabriquer les cartes à moindre coût, car il permet d'obtenir en une seule opération de moulage la périphérie de la carte SIM, le logement de la puce, les bretelles de liaison et les lignes de rupture.

On connaît aussi des cartes dans lesquelles les lignes de prédécoupe, ainsi que le logement de la puce, sont réalisées par usinage ou autre procédé par enlèvement de matière, au moyen d'outils adaptés tels que faisceau laser, jet haute pression, etc. Il est également connu de réaliser les lignes de prédécoupe par poinçonnage. Selon cette dernière technique, on utilise des outils comportant des lames tranchantes de forme correspondante à la forme du pourtour de la carte désirée, et on fait pénétrer ces lames dans le matériau de la carte, préalablement préparée par moulage sous forme d'une plaque de matière plastique ayant l'épaisseur finale de la carte, tout en laissant subsister, au moins dans certaines zones de la ligne de prédécoupe, une épaisseur de matière suffisante pour assurer le maintien de la carte dans le corps de carte de dimension supérieure, et suffisamment faible pour permettre une rupture de la matière dans les dites zones lors de la désolidarisation volontaire de la carte. Ce procédé permet d'obtenir une ligne de prédécoupe et des lignes de rupture beaucoup plus fines que le procédé par moulage. De plus, grâce à cette finesse des lignes de prédécoupe, il devient possible de replacer une carte SIM dans son logement après l'en avoir détachée en brisant les lignes de rupture, un maintien suffisant restant acquis par le seul effet du coincement de la carte dans son logement. Ce procédé est utilisé pour réaliser les lignes de prédécoupe des formats 3FF et 4FF dans des cartes multiformats combinant par exemple les formats 2FF/3FF/4FF.

Toutefois, ce procédé est coûteux, de l'ordre de trois fois plus que le procédé par moulage, car il nécessite notamment une opération de reprise de la carte, après la première opération de moulage, et l'utilisation d'outils précis pour assurer la précision des épaisseurs de matière subsistante après poinçonnage, qui sont de l'ordre de 100 micromètres.

De plus, que ce soit dans ce dernier cas, ou dans le cas de la fabrication par moulage, la rupture de la matière au niveau des lignes de ruptures ou de prédécoupe peut laisser subsister des arrachement de matière ou autres bavures qui sont préjudiciables à la facilité d'insertion ultérieure de la carte dans l'appareil qui doit la recevoir. La nécessité de laisser subsister des liaisons matérielles, sous forme de zones de matière résiduelle ou de membranes, pour assurer la liaison de la carte SIM avec le corps de carte de format supérieur, induit un effort nécessaire pour assurer la rupture de ces liaisons matérielles, avec un risque de détérioration de la puce placée sur la carte.

La discontinuité de la surface d'une carte de plus grande dimension, constituée par la présence des lignes de rupture du corps d'une carte de format inférieur, peut créer des problèmes lors de l'insertion de la carte plus grande dans un dispositif, par accrochage ou blocage des contacts de ce dispositif dans les irrégularités de surface formées par les dites lignes de rupture.

La présente invention a pour but de résoudre les problèmes évoqués ci-dessus, et vise en particulier à proposer des cartes, notamment des cartes multiformats, qui peuvent être fabriquées plus simplement et plus rapidement, donc à un prix réduit.

Elle vise aussi à éviter les bavures pouvant subsister à la périphérie d'une carte après séparation de celle-ci d'un corps de carte de dimension supérieure. Elle vise aussi à simplifier la fabrication de telles cartes, en particulier en permettant la fabrication par moulage de la carte et la formation des zones de jonction en une seule opération, donc de manière plus rapide et plus économique. Elle vise enfin à permettre la réalisation de cartes multifomats par moulage sans opération complémentaire de poinçonnage.

Elle vise aussi à limiter les efforts nécessaires pour séparer une carte plus petite de la carte plus grande dans laquelle elle est enchâssée, et ainsi réduire les risques de détérioration de la puce lors de cette séparation de la carte. Elle vise encore à permettre et à faciliter la remise en place d'une carte de plus petit format dans la carte de plus grand format, après qu'elle ait été séparée de cette dernière.

Avec ces objectifs en vue, l'invention a pour objet un procédé de fabrication d'une carte à puce comportant un corps de carte d'un premier format englobant un corps de carte d'un deuxième format plus petit que le premier format, coplanaire avec le corps de carte de premier format, le contour du corps de carte de deuxième format étant défini par une ligne de forme prédéterminée et le corps de carte de deuxième format étant lié au corps de carte de premier format en une pluralité de zones de liaison discontinues situées sur la dite ligne, procédé selon lequel la carte est fabriquée par moulage par injection de matière plastique.

Selon l'invention, le procédé est caractérisé en ce que on effectue le moulage des deux corps de carte en une seule opération d'injection, les corps de carte étant dans des plans décalés, et en réalisant, au niveau des dites zones de liaison, et dans les plans des corps de carte, une rainure sur le chant d'un des corps de carte et une nervure de forme complémentaire sur le chant de l'autre corps de carte, puis, après solidification au moins partielle des corps de carte, on ramène les corps de carte dans leur position coplanaire finale, les rainures et nervures étant réalisées de manière que lorsque les corps de cartes sont ramenés dans leur position coplanaire finale, le nervures s'emboîtent dans les rainures en enserrant le corps de carte de deuxième format dans le corps de carte de premier format.

Par plan du corps de carte, on désigne le plan médian dans l'épaisseur du corps de carte considéré, étant entendu que, dans le cas où les corps de cartes n'ont pas la même épaisseur, les dits plans médians de la carte finie peuvent ne pas être exactement confondus, mais légèrement décalés, dans la mesure ou les faces du corps de carte de deuxième format plus petit ne dépassent pas des faces du corps de carte de premier format plus grand. Par position coplanaire finale, on entendra donc toute position relative des corps de carte dans laquelle les faces du corps de carte de deuxième format plus petit ne dépassent pas des faces du corps de carte de premier format plus grand.

Par plans décalés lors du procédé de fabrication, on entend des plans suffisamment décalés pour que la nervure ou rainure formée sur le corps de carte de deuxième format plus petit soit entièrement au delà des plans des faces du corps de carte de premier format plus grand.

L'invention permet donc de fabriquer des cartes à puces multiformats, par un procédé de moulage, sans étapes supplémentaires de poinçonnage ou autres étapes nécessitant une reprise de la carte en cours de fabrication. Puisqu'il n'y a pas de liens matériels à rompre pour séparer les cartes de différents formats l'une de l'autre lors de leur utilisation ultérieure, les efforts nécessaires peuvent être parfaitement contrôlés et minimisés, évitant les risques d'endommagement de la puce lors d'une telle séparation. Tous les problèmes pouvant survenir du fait des bavures de cassure du plastique des liens entre les différents formats de cartes sont supprimés. Puisque le maintien d'une carte de plus petit format dans une carte de plus grand format est assuré par emboîtement des nervures de l'une dans les rainures de l'autre, et que ces nervures et rainures ne sont pas sensiblement modifiées après séparation, il est possible et aisé de désassembler et réassembler ces cartes ultérieurement, et cela plusieurs fois.

Les dites zones de liaison sont discontinues le long de la ligne définissant le contour de la carte de deuxième format, des rainures débouchantes sur les deux faces de la carte étant formées le long de cette ligne entre les dites zones de liaison, et en particulier dans les angles. Les rainures et nervures sont ainsi réalisées dans les zones de liaisons localisées sensiblement aux mêmes endroits que les bretelles de liaison des cartes antérieures.

Selon un premier mode de réalisation, on injecte les deux corps de carte dans le même moule mais séparément, le moule comportant des chambres de moulage disjointes, sans communication entre elles, pour les différents corps de cartes, chaque chambre étant alimenté par un moyen d'injection spécifique.

On peut alors injecter des matières différentes dans les différentes chambres, par exemple de l'ABS dans une chambre et du polycarbonate dans l'autre, permettant ainsi la fabrication en une seule opération de cartes bi-matières.

Selon un deuxième mode de réalisation, on injecte les deux corps de carte dans le même moule, les chambres de moulage des différents corps de carte communiquant entre elles, la matière plastique fluant entre les chambres lors de l'injection. Ce mode de réalisation permet de simplifier l'installation en alimentant la matière plastique uniquement dans une des chambres, et donc en réduisant le nombre de points d'injection et d'injecteurs. En particulier, en injectant la matière plastique dans la chambre correspondant au corps de carte de plus grande dimension, on évite de devoir amener la matière par des éléments de moule mobiles, comme on le verra par la suite.

Quel que soit le mode de réalisation, les éléments de moule servant à former les faces du corps de carte de deuxième format plus petit servent également de poinçon pour amener ledit corps de carte de deuxième format dans sa position finale coplanaire avec le corps de carte de premier format.

Par poinçon, on entendra ici les moyens permettant d'assurer le déplacement relatif des corps de carte après leur moulage, dans la direction orthogonale au plan de la carte, pour les amener dans leur position coplanaire finale, sans qu'il y ait déformation de la matière plastique injectée. Dans le premier mode de réalisation, ces moyens n'ont pas non plus de fonction de cisaillement de la matière plastique. Dans le deuxième mode de réalisation, ces moyens assurent un cisaillement de la matière uniquement dans les zones de communication entre les chambres de moulage, au cours de la première partie du déplacement amenant les corps de carte dans leur position coplanaire finale.

Selon une disposition complémentaire, on réalise les nervures ou rainures sur les chants du corps de carte de deuxième format au moyen de tiroirs rétractables vers l'extérieur, mobiles transversalement à la direction orthogonale au plan de la carte.

Selon une autre disposition complémentaire, on réalise les nervures ou rainures sur les chants du corps de carte de premier format au moyen de noyaux rétractables intérieurement. Avantageusement, ces noyaux servent également à constituer partiellement la paroi de la chambre de moulage du corps de carte de deuxième format, en combinaison avec la face d'un poussoir de forme tronconique, qui sert également à maintenir en place les dits noyaux lors du moulage.

L'invention a aussi pour objet un moule d'injection pour la fabrication d'une carte à puce selon le procédé mentionné précédemment, où le moule comporte un premier ensemble de moule déterminant une première chambre de moulage, s'étendant dans un plan général de la carte et de dimensions correspondant aux dimensions du corps de carte de plus grand format à réaliser. Selon l'invention, le moule comporte un deuxième ensemble de moule de section transversale correspondant aux dimensions de la carte de plus petit format et coulissant dans le premier ensemble de moule selon la direction orthogonale au plan général, le deuxième ensemble de moule comportant un poinçon et une matrice déterminant entre eux une deuxième chambre de moulage pour le corps de carte de plus petit format, s'étendant parallèlement à la première chambre,

le premier ensemble de moule comportant des tiroirs rétractables vers l'extérieur, transversalement à la direction orthogonale au plan général de la carte, les tiroirs comportant une face interne conformée pour constituer, au niveau des zones de jonction, des parois de moulage pour former les chants de la carte de plus petit format, ces parois de moulage étant pourvues de rainures ou nervures, s'étendant dans un plan parallèle au plan général,

la matrice du deuxième ensemble de moule comportant des noyaux rétractables intérieurement selon une direction transversale à la direction orthogonale au plan général de la carte, les noyaux comportant une face latérale externe conformée pour constituer, au niveau des zones de jonction, des parois de moulage pour former les chants de l'ouverture ménagée dans la carte de plus grand format pour recevoir la carte de plus petit format, les parois de moulage des noyaux étant pourvues de nervures ou rainures correspondant respectivement aux rainures ou nervures des tiroirs.

Selon une disposition particulière, la matrice du deuxième ensemble de moule comporte un poussoir ayant une face frontale qui, dans une position de moulage, constitue avec les faces frontales des noyaux la surface de moulage d'une face du corps de carte de plus petite dimension, le poussoir étant rétractable dans la matrice, à partir de la position de moulage, pour permettre le retrait des noyaux.

Préférentiellement, les noyaux sont guidés sur un corps de matrice dans lequel le poussoir est monté coulissant, et le poussoir comporte au niveau des noyaux des parois inclinées agencées pour coopérer avec des flancs internes des noyaux, ayant par exemple une inclinaison correspondante, pour maintenir les dits noyaux en position de moulage lorsque le poussoir est dans sa position de moulage, les noyaux étant en retrait en position de repos et étant amenés en position de moulage par le déplacement du poussoir vers sa position de moulage.

Selon une disposition particulière, les noyaux peuvent être pivotants sur un corps de matrice dans lequel le poussoir est monté coulissant.

Selon une autre disposition, des éléments élastiques sont disposés entre les noyaux et le poussoir pour amener les noyaux en position de retrait lorsque le poussoir est déplacé à partir de sa position de moulage.

Selon un premier mode de réalisation, la surface de moulage de la matrice, servant au moulage d'une face du corps de carte de plus petite dimension, est située, en position de moulage, au-delà de la surface de moulage du premier ensemble de moule qui sert au moulage de la face du corps de carte de plus grande dimension opposée à ladite face du corps de carte de plus petite dimension. Autrement dit, en position de moulage, les chambres des deux corps de carte sont décalés d'au moins l'épaisseur de la carte la plus épaisse, et donc ne communiquent pas entre elles. Chaque chambre est alors chambre étant alimenté par un moyen d'injection spécifique.

Selon un second mode de réalisation, la surface de moulage de la matrice, servant au moulage d'une face du corps de carte de plus petite dimension, est située, en position de moulage, entre les surfaces de moulage du premier ensemble de moule. Autrement dit, en position de moulage, les chambres des deux corps de carte communiquent entre elles au niveau des zones de liaison, permettant l'écoulement de matière plastique injectée entre les chambres. L'injection peut alors s'effectuer dans une seule chambre, par exemple la chambre destinée au moulage du corps de carte de plus grande dimension, ce qui évite de devoir amener la matière par les éléments mobiles du deuxième ensemble de moule.

L'invention a aussi pour objet une carte à puce, obtenue par le procédé mentionné précédemment, comportant un corps de carte d'un premier format englobant un corps de carte d'un deuxième format plus petit que le premier format, coplanaire avec le corps de carte de premier format, le contour du corps de carte de deuxième format étant défini par une ligne de forme prédéterminée et le corps de carte de deuxième format étant lié au corps de carte de premier format en une pluralité de zones de liaison situées sur la dite ligne. La carte selon l'invention est caractérisée en ce qu'il n'y a pas de continuité de matière dans lesdites zones de liaison, les corps de cartes étant maintenus assemblés dans ces zones par emboîtement de nervures formées sur le chant d'un des corps de cartes dans des rainures de forme correspondante formées sur le chant de l'autre corps de carte.

Selon une disposition particulière, les dites zones de liaison sont situées sur deux cotés opposés du contour du corps de carte de deuxième format, préférentiellement sur les plus grands côtés, et plus préférentiellement encore symétriquement par rapport au plan médian entre ces côtés.

On notera que, come déjà indiqué, la matière peut être différente pour les différents corps de carte.

On notera aussi que, visuellement, la carte selon l'invention peut présenter, au niveau des zones de liaison, une surface continue, sans relief.

L'interface, au niveau des zones de liaison, entre les chants de la carte de deuxième format et de la carte de premier format, présente les dites rainures et nervures, mais sans aucunes aspérités de rupture ou arrachements de matière qui subsiste nécessairement après désolidarisation des cartes fabriquées selon les méthodes antérieures, pour lesquelles il y a nécessairement rupture de matière par arrachement au niveau des zones de jonction lors de la désolidarisation.

Comme dans le cas des cartes obtenues par moulage et poinçonnage selon l'art antérieur, il est possible de replacer aisément une carte SIM selon l'invention dans son logement dans le corps de carte de format supérieur, après en avoir été extraite, par simple encliquètement des nervures dans les rainures, en jouant sur la légère élasticité de la matière plastique. Un avantage de l'invention est que dans un tel cas, la carte reste maintenue de manière similaire au maintien existant avant son extraction initiale, et la carte de plus petite dimension peut être ainsi séparée puis réassemblée sans problème avec la carte de plus grande dimension de nombreuses fois. Comparativement, dans le cas des cartes poinçonnées, le contact obtenu après réinsertion de la carte n'est réalisé que sur la faible épaisseur des zones de prédécoupe subsistant entre les poinçons lors du poinçonnage, et donc avec une capacité de maintien nettement plus faible qu'avec la présente invention, et peu de possibilité de renouveler l'opération plusieurs fois en assurant un maintien suffisant.

D'autres caractéristiques et avantages apparaîtront dans la description qui va être faite d'une carte conforme à l'invention, ainsi que du procédé et du dispositif de fabrication de cette carte.

On se reportera aux dessins annexés dans lesquels :
- la figure 1 est une vue générale d'une carte multiformats conforme à l'invention,
- la figure 2 est une vue à échelle agrandie de la carte de plus petit format montrant la disposition des zones de liaison,
- les figures 3 à 5 illustrent de manière schématique le moule de fabrication et les phases successives du procédé, conformes à l'invention, selon un premier mode de réalisation,
- la figure 6 illustre un deuxième mode de réalisation.

La carte représentée figure 1 est une carte à puce multiformats comportant un premier corps de carte 1 de plus grandes dimensions, par exemple au format carte de crédit 1FF, délimité par sa périphérie c1, et incorporant une carte SIM avec un corps de carte 2 de format 2FF ou mini-SIM, délimité par une ligne de prédécoupe c2. Ce corps de carte de format 2FF peut incorporer à son tour un corps de carte 3 de format 3FF ou micro-SIM, délimité par une ligne de prédécoupe c3, lequel porte le module électronique 9 placé dans un logement 3b en creux formé dans ce dernier corps de carte.

Les contours des différents corps de carte sont représentés par un tracé fin permettant de les délimiter, mais il doit être compris qu'il y a en fait pratiquement une rainure traversante entre deux corps de carte sur tout le contour à l'exception des zones de liaison 5 dont une disposition, non limitative, est représentée figure 2. Par la suite, on considérera que les explications données concernent la liaison entre les corps de carte 2 et 3, de format 2FF et 3FF, l'invention pouvant bien sûr s'appliquer à la liaison entre d'autres formats.

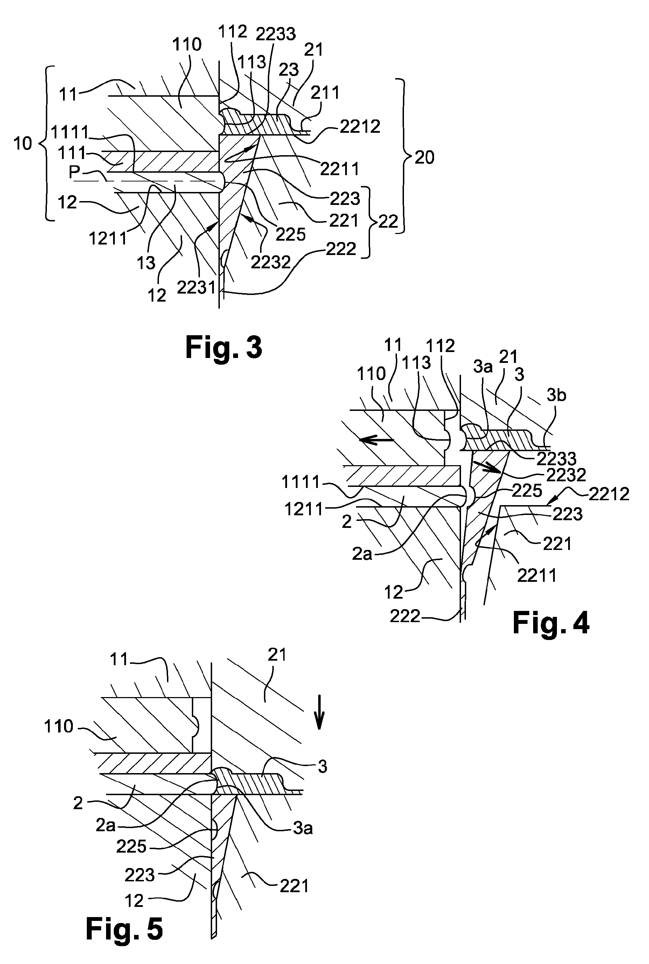

Sur les figures 3 à 5, on a représenté schématiquement, et seulement pour sa partie concernée par l'invention, le moule conforme à l'invention, dans un premier mode de réalisation, étant entendu que les autres partie du moule sont sensiblement identiques aux moules d'injection selon la technique connue.

Le dispositif, représenté figure 3 dans la position de moulage, comporte :
- un premier ensemble de moule 10 comportant deux parties 11, 12 séparables, de manière connue en soi, délimitant entre leurs surfaces opposées 1111, 1211 une première chambre de moulage 13, s'étendant selon un plan général P, dimensionnée et conformée pour y mouler le corps de carte 2 de plus grande dimension,
- un deuxième ensemble de moule 20 comportant également deux parties 21, 22, délimitant une deuxième chambre de moulage 23 dimensionnée et conformée pour y mouler le corps de carte 3 de plus petite dimension. On appellera par la suite ces deux parties le poinçon 21 et la matrice 22, étant entendu que, dans le cadre de la présente invention, il n'y a pas de déplacement relatif dudit poinçon 21 par rapport à ladite matrice 22, lors de l'étape de réalisation de la carte, mais, comme on le verra par la suite, uniquement un déplacement simultané du poinçon et de la matrice par rapport aux parties 11, 12 du premier ensemble de moule. Pour le démoulage, le poinçon et la matrice sont séparables, de manière similaire et simultanément avec les deux parties du premier ensemble de moule.

La première partie 11 du premier ensemble de moule 10 comporte, au niveau des zones de jonction 5 de la carte à fabriquer, des tiroirs rétractables 110 coulissant transversalement à la direction verticale, orthogonale au plan général P considéré horizontal. Préférentiellement, comme illustré sur les figures 3 à 5, les tiroirs 110 coulissent parallèlement au plan P, laissant subsister une paroi 111 entre les tiroirs et la chambre de moulage 13, la surface 1111 de cette paroi constituant la surface de moulage de la première partie du premier ensemble de moule. La face frontale 112 des tiroirs, orientée verticalement est située dans le plan de l'interface entre le premier et le deuxième ensemble de moule, et comporte une nervure 113, de section en arc de cercle, débordant dans la deuxième chambre de moulage 23.

Le poinçon 21 du deuxième ensemble de moule est guidé en coulissement dans la première partie 11 du premier ensemble de moule 10, et comporte un bossage 211 conformé pour former le logement de la puce électronique.

La matrice 22 du deuxième ensemble de moule comporte un poussoir 221 coulissant verticalement dans un corps de matrice 222, lequel est coulissant dans la deuxième partie 12 du premier ensemble de moule. Au niveau des zones de jonction 5, le corps de moule comporte des noyaux 223 rétractables vers l'intérieur, agencés de manière que les noyaux soient ramenés vers le centre de la matrice lorsque le poussoir 221 n'appuie pas sur les noyaux. La face externe 2231 des noyaux comporte une rainure 224 de forme complémentaire à celle des nervures 113 des tiroirs 110. La face interne 2232 des noyaux est inclinée et coopère avec une surface d'appui 2211 d'inclinaison correspondante formée sur le poussoir 221, de sorte que, lorsque le poussoir 221 est déplacé vers le haut, il repousse les noyaux vers l'extérieur, contre le premier ensemble de moule, et les maintient dans cette position, comme représenté figure 3, et lorsque le poussoir est déplacé vers le bas, il se dégage du contact avec les noyaux, et permet à ceux-ci de revenir vers le centre, dans la position montrée figure 4.

Dans la position prête au moulage, représentée figure 3, le poussoir 221 étant déplacé en butée vers le haut, sa face supérieure horizontale 2212 est coplanaire avec la face supérieure 2233 des noyaux et constitue ainsi la paroi de moulage de la face inférieure du corps de carte de plus petite dimension. Dans cette position de moulage, la face supérieure de la matrice, constituée par la face supérieure horizontale 2212 du poussoir et la face supérieure 2233 des noyaux est située plus haut que la face inférieure 1111 de la paroi 111 de la première partie 11 du premier ensemble de moule. Les nervures 113 des tiroirs 110 sont situés à hauteur de la chambre de moulage 23 du deuxième ensemble de moule, et les rainures 225 des noyaux de la matrice sont situées à hauteur de la chambre de moulage du premier ensemble de moule.

Le moulage par injection de matière plastique est alors réalisé, la matière étant apportée, de manière connue, dans chaque chambre de moulage 13 et 23 de manière indépendante, par des canaux d'injections non représentés. On notera que la matière injectée dans la chambre 13 peut être différente de la matière injectée dans la chambre 23, ce qui permet de réaliser en une seule opération une carte bi-matière, avec le corps de carte de plus grande dimension 2 dans une première matière et le corps de carte plus petit 3 dans une autre matière.

Lorsque la matière moulée est solidifiée, le poussoir 221 est retiré vers le bas, autorisant les noyaux à se rétracter vers l'intérieur, comme représenté figure 4, les rainures 225 se dégageant des nervures 2a résultant du moulage, au contact desdites rainures, du corps de carte 2 de plus grande dimension. Simultanément, les tiroirs 110 sont rétractés vers l'extérieur, leurs nervures 113 se dégageant des rainures 3a résultant du moulage, au contact desdites nervures, du corps de carte 3 de plus petite dimension.

Le poinçon 21 ainsi que le corps 222 de la matrice 22 et les noyaux 223, sont alors déplacés simultanément vers le bas, sans que les nervures 113 et rainures 225 n'interfèrent avec les rainures 3a et nervures 2a des corps de cartes, du fait des retraits des tiroirs et des noyaux. Ce déplacement est poursuivi jusqu'à ce que les surfaces des poinçons et matrices soient respectivement coplanaires avec les surfaces des première et deuxième parties du premier ensemble moule, les deux corps de cartes 2 et 3 étant alors également coplanaires, comme représenté figure 5, les nervures 2a du corps de carte 2 de plus grande dimension s'insérant alors dans les rainures 3a du corps de carte 3 de plus petite dimension. Les deux corps de cartes sont alors liés au niveau des zones de jonction 5, par cet encastrement des rainures et nervures.

Les parties supérieures et inférieures du moule, à savoir d'une part la première partie 11 du premier ensemble de moule et le poinçon 21, et d'autre par la deuxième partie 12 du premier ensemble de moule et la matrice 22, sont alors écartées l'une de l'autre, permettant de sortir la carte avec ses corps de carte assemblés.

Le moule est ensuite refermé, et le deuxième ensemble de moule est ramené dans sa position d'origine de la figure 3, pour réaliser un nouveau moulage.

Dans le second mode de réalisation illustré par la figure 6, on retrouve les éléments constitutifs du moule décrit précédemment, à savoir un premier ensemble de moule 10 comportant une première partie 11 et une deuxième partie 12, délimitant entre elles une chambre de moulage 13 pour le corps de carte de plus grande dimension 2, et un deuxième ensemble de moule 20 comportant un poinçon 21 et une matrice 22 délimitant entre eux une chambre de moulage 23 pour le corps de carte de plus petite dimension 3.

La matrice 22 comporte un poussoir 221 et des noyaux 223', similaire à l'exemple précédent, en en différant par l'utilisation de moyens de rappels élastiques 226, disposés dans les parois inclinées 2232 des noyaux, pour rétracter lesdits noyaux.

A la différence de l'exemple précédent, les tiroirs 110' comportent ici des rainures 113', et les noyaux 223' comportent des nervures 225'. Egalement, dans la position du dispositif prêt au moulage représentée sur la figure 6, la face supérieure de la matrice constituée par les faces 2212, 2233 est située plus bas que la face inférieure 1111 de la première partie du premier ensemble de moule, au niveau d'une partie supérieure de la chambre 13, de sorte que les chambres 13 et 23 sont en communication par des passages 24 au niveau des zones de liaison 5 des corps de cartes. Par ailleurs, ladite face inférieure de la première partie du premier ensemble de moule est constituée directement, dans les zones de liaison où se trouvent les tiroirs 110, par les faces inférieures 1101 de ces tiroirs. Cette disposition permet de minimiser la différence de niveau entre les rainures 113' et les nervures 225', différence de niveau qui doit être suffisamment faible du fait de l'existence des passages 24.

Dans ce mode de réalisation, l'injection de matière plastique peut être effectuée uniquement dans la chambre 13, la matière pouvant alors s'écouler dans la chambre 23 par les passages 24, comme représenté par les flèches F de la figure 6. Après moulage et refroidissement de la matière, les tiroirs 110' et les noyaux 223' sont rétractés, de manière similaire à ce qui a été dit dans le mode de réalisation précédent.

Par contre, il subsiste alors des liens de matière au niveau des passages 24 entre les deux corps de cartes 2 et 3. Ces liens sont rompus par cisaillement lors de la descente simultanée du poinçon et de la matrice, juste avant que cette descente provoque l'insertion des nervures du corps de carte de plus petite dimension dans les rainures du corps de carte de plus grande dimension.

On notera que, dans les deux modes de réalisation, les nervures et rainures pourraient être interverties, sans que cela modifie le principe et la mise en oeuvre de l'invention.

Egalement, ce qui vient d'être décrit pour la liaison entre des cartes de formats 2FF et 3FF est transposable aux autres formats ou autres combinaison de formats de carte.

Bien que, dans les exemples précédents, il ait été indiqué que les surfaces des poinçons et matrices soient coplanaires avec les surfaces des parois du premier ensemble moule en fin de course du deuxième ensemble de moule, lorsque les deux corps de carte sont assemblés, ce qui est le cas quand les différents corps de carte ont la même épaisseur, on pourrait bien sûr obtenir une carte conforme à l'invention dans laquelle les épaisseurs des différents formats seraient différentes, comme dans le cas illustré figure 6, auquel cas les surfaces en questions ne seraient pas exactement coplanaires, mais le principe de l'invention restant le même comme cela sera aisément compris par l'homme de métier.

## Revendications

1. Procédé de fabrication d'une carte à puce comportant un corps de carte (2) d'un premier format englobant un corps de carte (3) d'un deuxième format plus petit que le premier format, coplanaire avec le corps de carte de premier format, le contour (c3) du corps de carte de deuxième format étant défini par une ligne de forme prédéterminée et le corps de carte de deuxième format étant lié au corps de carte de premier format en une pluralité de zones de liaison (5) discontinues situées sur la dite ligne, procédé selon lequel la carte est fabriquée par moulage par injection de matière plastique,
**caractérisé en ce qu'**on effectue le moulage des deux corps de carte en une seule opération d'injection, les corps de carte étant dans des plans décalés, et en réalisant, au niveau des dites zones de liaison, et dans les plans des corps de carte, une rainure (3a) sur le chant d'un des corps de carte et une nervure (2a) de forme complémentaire sur le chant de l'autre corps de carte, puis, après solidification au moins partielle des corps de carte, on ramène les corps de carte dans leur position coplanaire finale, les rainures et nervures étant réalisées de manière que lorsque les corps de cartes sont ramenés dans leur position coplanaire finale, le nervures (2a) s'emboîtent dans les rainures (3a) en enserrant le corps de carte (3) de deuxième format dans le corps de carte (2) de premier format.

2. Procédé selon la revendication 1, **caractérisé en ce qu'**on injecte les deux corps de carte dans le même moule mais séparément, le moule comportant des chambres de moulage (13, 23) disjointes, sans communication entre elles, pour les différents corps de cartes, chaque chambre étant alimenté par un moyen d'injection spécifique.

3. Procédé selon la revendication 2, **caractérisé en ce qu'**on injecte des matières différentes dans les différentes chambres.

4. Procédé selon la revendication 1, **caractérisé en ce qu'**on injecte les deux corps de carte dans le même moule, les chambres de moulage des différents corps de carte communiquant entre elles, la matière plastique fluant entre les chambres lors de l'injection.

5. Procédé selon la revendication 1, **caractérisé en ce que** les éléments de moule (21, 22) servant à former les faces du corps de carte de deuxième format plus petit servent également de poinçon pour amener ledit corps de carte de deuxième format dans sa position finale coplanaire avec le corps de carte de premier format.

6. Moule d'injection pour la fabrication d'une carte à puce, comportant un premier ensemble de moule (10) déterminant une première chambre de moulage( 13), s'étendant dans un plan général (P) de la carte et de dimensions correspondant aux dimensions du corps de carte (2) de plus grand format à réaliser,
**caractérisé en ce qu'**il comporte un deuxième ensemble de moule (20) de section transversale correspondant aux dimensions du corps de carte (3) de plus petit format et coulissant dans le premier ensemble de moule selon la direction orthogonale au plan général, le deuxième ensemble de moule comportant un poinçon (21) et une matrice (22) déterminant entre eux une deuxième chambre de moulage (23) pour le corps de carte de plus petit format, s'étendant parallèlement à la première chambre,
le premier ensemble de moule (10) comportant des tiroirs (110) rétractables vers l'extérieur, transversalement à la direction orthogonale au plan général de la carte, les tiroirs comportant une face interne (112) conformée pour constituer, au niveau des zones de jonction (5), des parois de moulage pour former les chants de la carte de plus petit format, ces parois de moulage étant pourvues de nervures (113) ou rainures (113'), s'étendant dans un plan parallèle au plan général,
la matrice (22) du deuxième ensemble de moule comportant des noyaux (223) rétractables intérieurement selon une direction transversale à la direction orthogonale au plan général de la carte, les noyaux comportant une face latérale externe (2231) conformée pour constituer, au niveau des zones de jonction (5), des parois de moulage pour former les chants de l'ouverture ménagée dans la carte de plus grand format pour recevoir la carte de plus petit format, les parois de moulage des noyaux étant pourvues de rainures (225) ou nervures (225') correspondant respectivement aux rainures ou nervures des tiroirs.

7. Moule d'injection selon la revendication 6, **caractérisé en ce que** la matrice (22) du deuxième ensemble de moule comporte un poussoir (221) ayant une face frontale supérieure (2212) qui, dans une position de moulage, constitue avec les faces frontales supérieures (2233) des noyaux (223) la surface de moulage d'une face du corps de carte de plus petite dimension, le poussoir (221) étant rétractable dans la matrice, à partir de la position de moulage, pour permettre le retrait des noyaux.

8. Moule d'injection selon la revendication 6, **caractérisé en ce que** les noyaux (223) sont guidés sur un corps de matrice (222) dans lequel le poussoir est monté coulissant, et le poussoir comporte au niveau des noyaux des parois inclinées (2211) agencées pour coopérer avec des flancs internes (2232) des noyaux, pour maintenir les dits noyaux en position de moulage lorsque le poussoir (221) est dans sa position de moulage.

9. Moule d'injection selon la revendication 8, **caractérisé en ce que** des éléments élastiques (226) sont disposés entre les noyaux (223') et le poussoir pour amener les noyaux en position de retrait lorsque le poussoir est déplacé à partir de sa position de moulage.

10. Moule d'injection selon la revendication 6, **caractérisé en ce que** la surface (2212, 2233) de moulage de la matrice, servant au moulage d'une face du corps de carte de plus petite dimension, est située, en position de moulage, au-delà de la surface (1111) de moulage du premier ensemble de moule qui sert au moulage de la face du corps de carte de plus grande dimension opposée à ladite face du corps de carte de plus petite dimension.

11. Moule d'injection selon la revendication 6, **caractérisé en ce que** la surface (2212, 2233) de moulage de la matrice, servant au moulage d'une face du corps de carte de plus petite dimension, est située, en position de moulage, entre les surfaces (1111, 1211) de moulage du premier ensemble de moule, les chambres (13, 23) de moulage des deux corps de carte communiquant entre elles, en position de moulage, par des passages (24) au niveau des zones de liaison (5).

12. Carte à puce comportant un corps de carte (2) d'un premier format englobant un corps de carte (3) d'un deuxième format plus petit que le premier format, coplanaire avec le corps de carte de premier format, le contour (c3) du corps de carte de deuxième format étant défini par une ligne de forme prédéterminée et le corps de carte de deuxième format étant lié au corps de carte de premier format en une pluralité de zones de liaison (5) situées sur la dite ligne, **caractérisée en ce qu'**il n'y a pas de continuité de matière dans lesdites zones de liaison, les corps de cartes étant maintenus assemblés dans ces zones par emboîtement de nervures (2a) formées sur le chant d'un des corps de cartes dans des rainures (3a) de forme correspondante formées sur le chant de l'autre corps de carte.

13. Carte à puce selon la revendication 12, **caractérisée en ce que** les dites zones de liaison (5) sont situées sur deux cotés opposés du contour du corps de carte (3) de deuxième format.

14. Carte à puce selon la revendication 12, **caractérisée en ce que** les dites zones de liaison (5) sont situées sur les plus grands côtés du corps de carte de plus petit format.

15. Carte à puce selon la revendication 12, **caractérisée en ce que** la matière est différente pour les différents corps de carte.
